# EUROPEAN PATENT SPECIFICATION

(11) **EP 2 335 963 B1**
(45) Date of publication and mention of the grant of the patent: **14.03.2012**
(21) Application number: 10195345.3
(22) Date of filing: 16.12.2010
(51) Int. Cl.: B60K 11/08

(54) **Ventilation structure for front vehicle body section**
Belüftungsstruktur für den Vorderwagenaufbauteil
Structure de ventilation pour section avant de carrosserie de véhicule

(30) Priority: 18.12.2009 JP 2009288160; 11.06.2010 JP 2010134522
(43) Date of publication of application: 22.06.2011
(73) Proprietor: Honda Motor Co., Ltd., Tokyo 107-8556 (JP)
(72) Inventor: Akizuki, Hisashi c/o Honda R&D Co., Ltd., Saitama 351-0193 (JP); Kubota, Toshio c/o Honda R&D Co., Ltd., Saitama 351-0193 (JP); Konishi, Takanori c/o Honda R&D Co., Ltd., Saitama 351-0193 (JP); Hirose, Yoshitaka c/o Honda R&D Co., Ltd., Saitama 351-0193 (JP)
(74) Representative: Prechtel, Jörg

(56) References cited:
- EP-A1- 2 020 327
- EP-A2- 1 728 667
- WO-A1-2006/066680
- GB-A- 1 153 361
- US-A- 4 753 288

## Description

The present invention relates to an improvement in vehicular ventilation structures for directing travel wind (i.e., wind encountered as a vehicle travels) into a radiator, engine room, etc. provided in a front vehicle body section.

Among the conventionally-known ventilation structures for a front vehicle body section (hereinafter also referred to as "front-vehicle-body-section ventilation structures") is one in which a shutter device for opening and closing an air flow passage is provided in front of a radiator. One example of such a front-vehicle-body-section ventilation structure is known from Japanese Patent Application Laid-open Publication No. 2007-001503 (hereinafter referred to as "the patent literature"). According to the disclosure of the patent literature, casing members are fixed to a vehicle body, and shutter devices are mounted to the casing members. Air flow passages, opening toward grille openings formed in a front end section of the vehicle body, are openable and closable by the shutter devices to adjust an amount of travel wind to be directed to a radiator and engine room provided behind the shutter devices.

Each of the above-mentioned shutter devices includes a plurality of vane members. The vane members each include a plate-shaped vane body and a support shaft supporting the vane body, and the support shafts are each pivotably supported by opposed end portions of the corresponding casing member. Each of the support shafts has an outer diameter greater than the thickness of the vane body and projects, or is exposed, from the surface of the vane body. Thus, when travel wind hits the vane members, there occurs disturbance in air streams flowing along the surfaces of the vanes, which may result in increased air resistance and wind roar. Further, because each of the support shafts projects from the surface of the corresponding vane member, design freedom of the surface of the corresponding vane member would be limited, and thus, control of travel wind would be adversely influenced.

The preamble of enclosed claim 1 is based on EP 1 728 667 A1. There, in figures 9a and 9b, the top portion of the curved wind receiving surface is located directly above and behind the shaft pins 308.

In GB 1 153 361 A, figure 2, the top portion of the curved wind receiving surface is located directly above the pin axis.

In US 4 753 288 A, figures 3, 11 and 12, the top portion of the curved wind receiving surface is located directly above the pin axis, similar to D2.

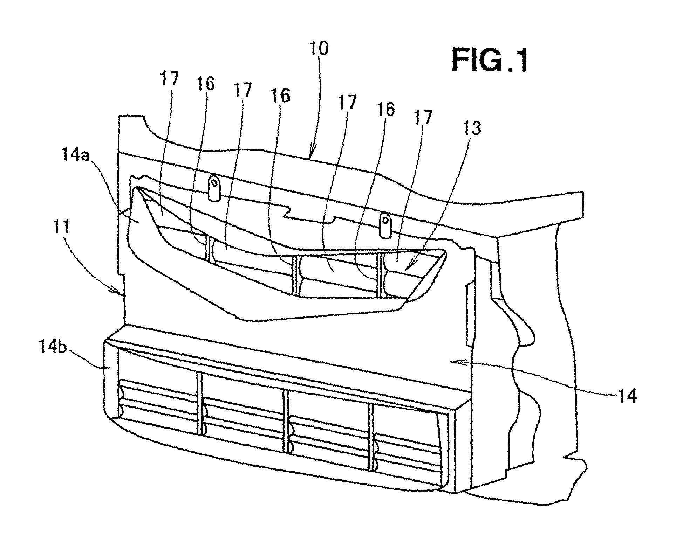

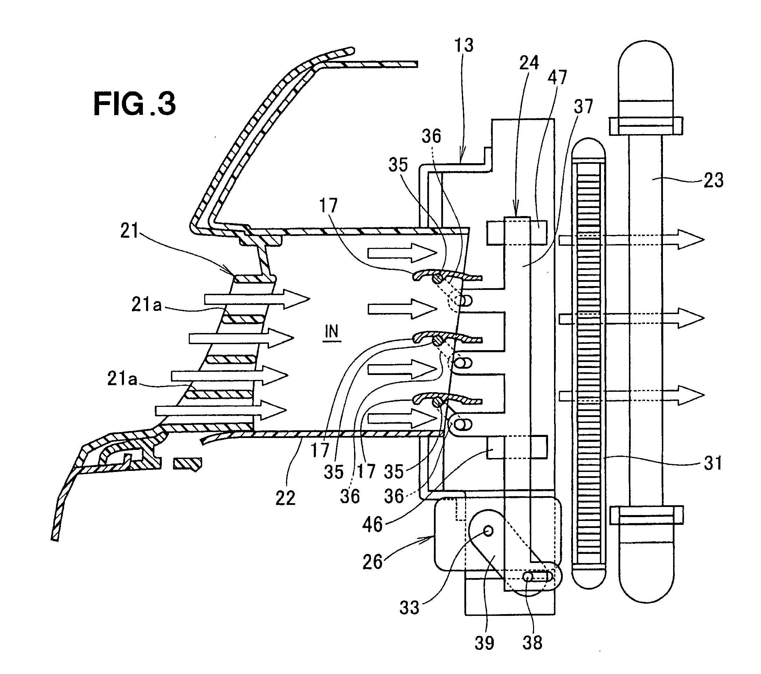

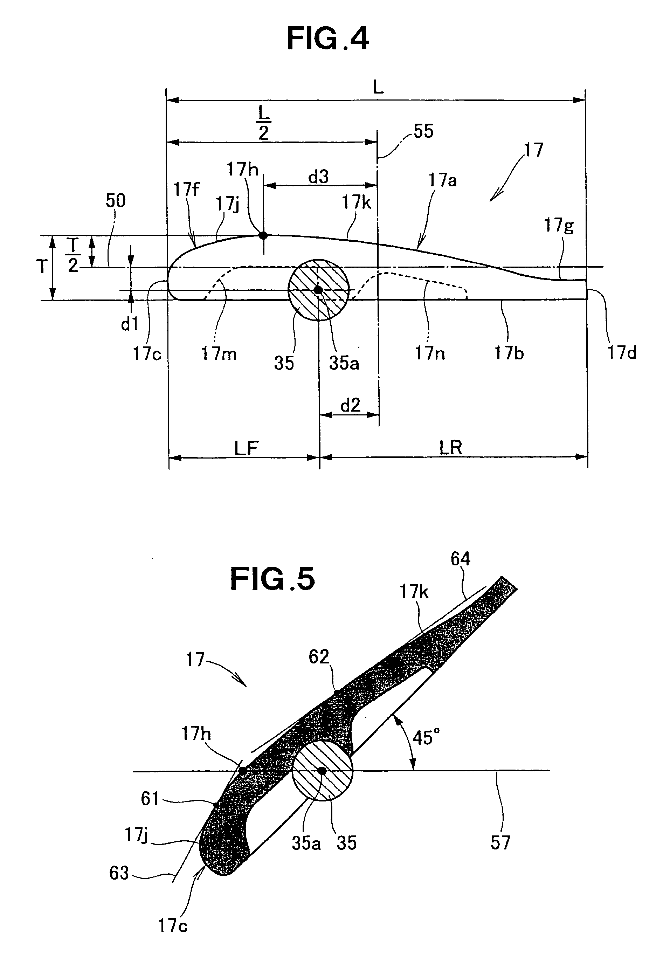

In WO 2006/066680 A1, figures 3 and 5 show a rib 2c on an upper side of the fin 2, in the opening position, off-set from the pivot pin 2a to the left side of figure 5, but this upper side the rib 2c provided thereon is not the wind receiving surface in the closed position but the rear surface opposite therefrom (figure 1). Thus, the rib 2c does not correspond to the top portion 17h of the present invention.

In EP 2 020 327 A1, the pivot axis 61 is located on the front end portion of the pin 58.

In view of the foregoing prior art problems, it is an object of the present invention to provide an improved front-vehicle-body-section ventilation structure which can not only effectively prevent disturbance of air flows introduced into a front section of the vehicle body but also achieve an enhanced design freedom.

In order to accomplish the above-mentioned object, the present invention provides an improved front-vehicle-body-section ventilation structure in accordance with claim 1. The ventilation structure comprises: an external air introduction section capable of introducing travel wind from opening portions provided in a front end section of a vehicle body; and an opening/closing mechanism provided in the external air introduction section for controlling an amount of travel wind to be introduced from the opening portions, the opening/closing mechanism including a plurality of fins arranged in a side-by-side row, each of the fins having a respective shaft portion about which the fin is pivotable, via a drive device, between a fully opened position and a fully closed position to open and close the external air introduction section, the shaft portions of the fins extending not only perpendicularly to the row of the fins but also along lengths of the fins, each of the shaft portions being offset toward a back surface of a corresponding one of the fins, opposite from a travel wind receiving surface of the corresponding fin, without being exposed from the travel wind receiving surface of the fin in a fully closed position.

According to the present invention, the shaft portion is located remote from, or opposite from, the fin's wind receiving surface facing forward of the vehicle when the fin is in the closed position closing the external air introduction section (or opening portions), and the shaft portion does not project, or is not exposed, from the wind receiving surface. Thus, unlike in the conventional counterparts, no concave/convex surfaces are formed on the wind receiving surface of each of the fins, and thus, the wind receiving surface can be a smooth surface, such as a smooth flat or curved surface. As a consequence, airstreams can flow smoothly along the wind receiving surface, causing no flow disturbance and wind roar.

Further, in the present invention, the opening/closing mechanism includes the plurality of fins arranged in a row in such a manner as to be capable of fully closing the external air introduction section, and each of the fins has the shaft portion about which the fin is pivotable to open or close the external air introduction section. The shaft portions of the fins extend not only perpendicularly to the row of the fins but also along lengths (i.e., lengths as viewed from the front of the vehicle) of the fins, and each of the shaft portions is offset toward the back surface of the corresponding fin, opposite from the wind receiving surface of the corresponding fin, without projecting from, or being exposed from, the wind receiving surface of the fin in the fully-closed position. With such arrangements, no concave/convex surfaces are formed on the wind receiving surfaces of the fins, and thus, no disturbance occurs in flows of travel wind due to the wind receiving surfaces, so that the travel wind can be delivered or directed smoothly into the radiator and engine room. In this way, the present invention can enhance aerodynamic performance of the vehicle body and effectively prevent generation of undesired wind roar. Also, the present invention can achieve an enhanced design freedom of the wind receiving surfaces and can finely adjust an amount of flows of travel wind and finely set a travel wind directing direction.

In a preferred embodiment, each of the shaft portions is provided at a center position in a cross-sectional length direction of the corresponding fin or provided closer to a front end portion of the fin than the center position in the cross-sectional length direction, as viewed when the fin is in the opened position with the cross-sectional length of the fin oriented in a front-rear direction of the vehicle. In the case where the shaft portion is provided closer to the front end portion of the corresponding fin than the center position in the cross-sectional length direction, it is possible to not only reduce the area of a wind receiving surface portion of the fin which acts to pivot the fin in a closing direction when travel wind has hit the fin, but also increase the area of a wind receiving surface portion of the fin which acts to pivot the fin in an opening direction when the travel wind has hit the fin. Thus, the present invention can reduce a necessary load of the drive device when opening the fins. When the vehicle has got into a puddle and a water hammer has hit the fin, there occurs a difference between water pressure received by a front region of the shaft portion and water pressure received by a rear region of the shaft portion. Because of such a water pressure difference, the present invention can cause the fin to pivot from the closed position to the opened position, thereby allowing an excessive water hammer load to escape past the fin.

The wind receiving surface of each of the fins has a top portion located on a partway position in the cross-sectional length direction of the fin, a first slant surface lying from the top portion to the front end portion, and a second slant surface lying from the top portion to a rear end portion of the fin as viewed when the fin is in the opened position with the cross-sectional length of the fin is oriented in the front-rear direction of the vehicle. The first slant surface is formed to slant to gradually approach the back surface of the fin in a direction toward the front end portion, while the second slant surface is formed to slant to gradually approach the back surface of the fin in a direction toward the rear end portion. As the fin has started pivoting in the closing direction from a fully opened position, the first slant surface approaches a perpendicular relation to flows of travel wind more than the second slant surface, so that travel wind pressure acting on the fin in the closing direction in response to the travel wind hitting the first slant surface becomes greater than travel wind pressure acting on the fin in the- opening direction in response to the travel wind hitting the second slant surface. Thus, fin-closing pivoting torque greater than fin-opening pivoting torque is produced by the travel wind pressure. In other words, the first slant surface can increase travel wind pressure that acts on the fin in the closing direction, while the second slant surface can reduce travel wind pressure that acts on the fin in the opening direction. In this way, the present invention can reduce the load of the drive device required when closing the fins, thereby reducing power consumption by the drive device.

At a pivot angle of the fin where wind pressure the wind receiving surface of the fin receives from the travel wind becomes the greatest, the top portion and the shaft portion are located in alignment with each pother on the same imaginary straight line extending along a travel wind directing direction of the ventilation structure. At such a pivot angle of the fin where wind pressure the wind receiving surface receives from the travel wind becomes the greatest, the entirety of the first slant surface is located closer to the front end portion than the straight line passing the top portion and the shaft portion, while the entirety of the second slant surface is located closer to the rear end portion than the straight line. Because the top portion and the shaft portion are located in alignment with each other on the same imaginary straight line at the pivot angle of the fin where wind pressure the wind receiving surface of the fin receives from the travel wind becomes the greatest, the first slant surface, whose entire surface is located closer to the front end portion than the straight line, can increase auxiliary fin-closing pivoting force imparted by travel wind pressure, while the second slant surface, whose entire surface is located closer to the rear end portion than the straight line, can reduce force that occurs due to the travel wind pressure and impedes pivoting movement, in the closing direction, of the fin (i.e., fin-closing impeding force). Therefore, at the pivot angle of the fin where wind pressure the wind receiving surface of the fin receives from the travel wind becomes the greatest, the present invention can even further reduce the load of the drive device for driving the fins.

Preferably, a region of the wind receiving surface which receives travel wind when the fin is in the fully closed position constitutes an effective wind receiving surface, the front end portion of the fin constitutes an effective front end and an end of the effective wind receiving surface opposite from the effective front end constitutes an effective rear end. The shaft portion is disposed in a region lying from a position, where a ratio between a length from the effective front end to a center of the shaft portion and a length from the center of the shaft portion to the effective rear end is 4.8 : 5.2, to the effective front end. Thus, in response to any types of water hammers, the above arrangements can create a difference in fin-opening direction between a water hammer load (water pressure) received by a wind receiving surface portion lying from the effective front end to the center of the shaft portion and a water hammer load (water pressure) received by a wind receiving surface portion lying from the center of the shaft portion to the effective rear end, so that the fin can be opened reliably. Consequently, when a water hammer has hit the fin, the present invention can reliably cause the fin to pivot from the closed position toward the opened position and thereby allows a water hammer load on the fin to escape past the fin, so that the invention can reliably protect the fin.

In a preferred embodiment, the shaft portion is disposed in a region where the ratio is in a range from 4.8 : 5.2 to 4.5 : 5.5. Therefore, the shaft portion can be prevented from being located at a position closer to the effective front end than a position where a motor load reduction rate critically lowers when the fin is opened, and can be located at a position where the motor load is not increased while the fin is in the closed position. As a result, the present invention can achieve an enhanced efficiency of the ventilation structure.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a perspective view of a front vehicle body section, which particularly shows a first embodiment of a ventilation structure of the present invention employed in the front vehicle body section;
Fig. 2 is a sectional view of the first embodiment of the ventilation structure with a shutter mechanism thereof in a closed position;
Fig. 3 is a sectional view of the first embodiment of the ventilation structure with the shutter mechanism in an opened position;
Fig. 4 is a side view of one of a plurality of fins employed in the first embodiment of the ventilation structure;
Fig. 5 is a sectional view showing the fin in an inclined position;
Figs. 6A to 6C are views explanatory of behavior of the fin in the first embodiment of the ventilation structure;
Figs. 7A to 7C are views explanatory of behavior of a comparative conventional example of a fin;
Fig. 8 is a graph showing relationship between fin-opening pivoting torque and pivot angle of the fin employed in the first embodiment;
Fig. 9 is a graph showing relationship between necessary motor load of a torque motor and the pivot angle of the fin;
Fig. 10 is a front view of a second embodiment of the ventilation structure, which particularly shows a plurality of fins in a fully closed position;
Fig. 11 is a sectional view taken along line 11 - 11 of Fig. 10;
Fig. 12 is a view explanatory of behavior of one of the fins in the second embodiment of the ventilation structure;
Figs. 13A and 13B are views explanatory of how the fin behaves to allow water to escape past the fin;
Fig. 14 is a graph showing relationship between position of a pivot shaft, opening/closing of the fin and motor load; and
Figs. 15A to 15C are views showing different positions of the pivot shaft in the second embodiment of the ventilation structure.

Reference is now made to Fig. 1 showing in perspective a front vehicle body section and, more particularly, a first embodiment of a ventilation structure (hereinafter referred to as "front-vehicle-body-section ventilation structure") of the present invention. In the front-vehicle-body-section ventilation structure, a ventilation device 11 for controlling an amount of travel wind (i.e., wind encountered as a vehicle travels) to be introduced and directed into a radiator and engine room is provided on the front surface of a bulkhead 10 constituting the front body of the vehicle. The ventilation device 11 includes a shutter mechanism 13 provided on the front surface of the bulkhead 10 for controlling an amount of travel wind to be introduced.

The shutter mechanism 13 is disposed in front of the radiator 23 and includes a shutter base 14 mounted on the bulkhead 10, a plurality of vertically-elongated support members 16 fixedly mounted on the shutter base 14, and a plurality of horizontal fins (three fins in the instant embodiment) openably and closably supported by the vertically-elongated support members 16. Reference numerals 14a and 14b indicate ventilation openings formed in upper and lower regions of the shutter base 14.

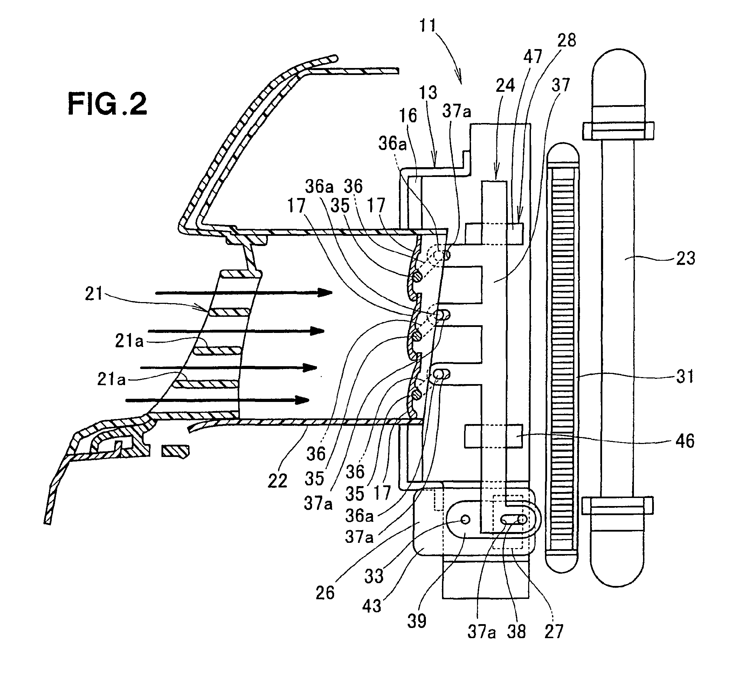

Fig. 2 is a sectional view of the front-vehicle-body-section ventilation structure with the shutter mechanism 13 in a closed position. As shown, the ventilation device 11 includes: a duct 22 connected at its front end portion to opening portions 21a of a grille 21 provided on a front end section of the vehicle body and connected at its rear end portion to the shutter mechanism 13; a torque motor (drive means) 26 connected to the individual fins 17 via a link mechanism 24; a control section 27 for controlling the torque motor 26; and a guide member 28 designed to not only guide the link mechanism 24 but also function also as a stopper for limiting movement of a movable section of the link mechanism 24. Reference numeral 31 indicates an air conditioner condenser disposed behind the shutter mechanism 13 and in front of the radiator 23.

In Fig. 2, the individual fins 17 of the shutter mechanism 13 are in a fully closed position so that no travel wind is introduced from the opening portions 21a to the radiator 23 and engine room.

As shown in Figs. 1 and 2, the shutter mechanism 13 also includes a plurality of pivot shafts (or shaft portions) 35 pivotably supported by the vertically-elongated support members 16, and the fins 17 and a plurality of arm members 36 integrally connected to the pivot shafts (shaft portions) 35. Each of the arm members 36 is connected to the link mechanism 24.

The link mechanism 24 includes a vertical slide link 37 connected to the plurality of arm members 36, and an arm link 39 connected at one end portion to a lower end portion of the vertical slide link 37 via a connection pin 38 and connected at another end portion to a rotation shaft 33 of the torque motor 26 (motor shaft 33).

The arm members 36 and slide link 37 are interconnected by arm shaft portions 36a, provided at respective one ends of the arm members 36, movably inserted in elongated holes 37a formed in the slide link 37. The connection pin 38 is movably inserted in an elongated hole 37a formed in a lower end portion of the slide link 37.

The torque motor 26 is a D.C. current motor which uses torque of its rotation shaft 33 rotating within a limited rotational angle range, and which includes a motor case 43 having the control section 27 accommodated therein.

The guide section 28 includes a lower guide 46 that not only limits downward movement of the slide link 30 moving in a vertical or up-down direction but also slidably supports a lower portion of the slide link 37, and an upper guide 47 that not only limits upward movement of the slide link 37 but also slidably supports an upper portion of the slide link 37. In the state shown in Fig. 2, the upper portion of the slide link 37 is in contact with the lower end of the upper guide 47.

Fig. 3 shows the individual fins 17 of the shutter mechanism 13 in a fully opened position fully opening an external air introduction section IN (or opening portions 21a). While the vehicle is traveling in the state shown in Fig. 3, travel wind, introduced through the opening portions 21a of the grille 21, passes through the duct 17, then through between the fins 17 and then through the air conditioner condenser 31 and radiator 23 to thereby effect heat exchange. Then, the travel wind gets into the engine room located behind the radiator 23. In the state shown in Fig. 3, the lower portion of the slide link 37 is in contact with the upper end of the lower guide 46. The following mostly describe only one of the fins 17 because the fins 17 are identical in construction and behavior to one another.

Fig. 4 shows the fin 17 in the fully opened position where its cross-sectional length extends (i.e., is oriented) in a front-rear direction of the vehicle as in Fig. 3. When viewed in the cross section taken transversely at right angles to the pivot shaft 35, as shown in Figs. 3 and 4, a direction of a longer dimension (i.e., cross-sectional length) of the fin 17 is hereinafter referred to as "cross-sectional longitudinal direction" or "cross-sectional length direction" of the fin 17, while a direction of a shorter dimension of the fin 17 is hereinafter referred to as "thickness direction" of the fin 17.

The fin 17 has two surfaces opposite from each other in the width direction, i.e. wind receiving surface 17a and back surface 17b, and front and rear end portions 17c and 17d opposite from each other in the cross-sectional longitudinal or length direction.

The wind receiving surface 17a comprises a main wind receiving surface portion 17f closer to the front end portion 17c, and a rear-side surface portion 17g closer to the rear end portion 17d. The main wind receiving portion 17f is formed as an upwardly convex curved surface and has a top portion 17h (indicated by a black circle in Fig. 4) located adjacent to the front end portion 17c and projecting to the highest level in the width direction. The rear-side surface portion 17g is formed as a substantially flat surface smoothly continuing to the main wind receiving portion 17f.

A region of the main wind receiving portion 17f located closer to the front end portion 17c than the top portion 17h is formed as a first slant surface 17j slanting forward and downward, while a region of the main wind receiving portion 17f located closer to the rear end portion 17d than the top portion 17h is formed as a second slant surface 17k slanting rearward and downward.

Further, the back surface 17b is formed as a flat surface having front and rear recessed portions 17m and 17n, for weight reduction of the fin 17. The front end portion 17c has a forwardly convex curved surface connecting continuously to the wind receiving surface 17a, and this forwardly convex curved surface is included in the main wind receiving surface 17f. The rear end portion 17d has a smaller thickness than the other portions of the fin 17.

The pivot shaft 35, more specifically the center or axis 35a of the pivot shaft 35, is not only offset in the thickness direction by a distance d1 from a centerline 50, horizontally passing the center of the thickness T of the fin 17, toward the back surface 17b, but also offset in the cross-sectional longitudinal direction by a distance d2 from a centerline 55, passing the center of the cross-sectional length L of the fin 17, toward the front end portion 17c.

Further, the top portion 17h of the wind receiving surface 17a is offset by a distance d3 from the centerline 55 toward the front end portion 17c, but also offset from the axis 35a of the pivot shaft 35 toward the front end portion 17c.

When the fin 17 is inclined about the axis 35a, for example, by 45 ° toward its closed position, as shown in Fig. 5, the top portion 17h of the wind receiving surface 17a and the center or axis 35a of the pivot shaft 35 are located in alignment with each other in a travel wind directing direction, namely, on a same imaginary horizontal straight line 57 extending in the front-rear direction or travel wind directing direction of the ventilation structure. At that time, the first slant surface 17j is located below the horizontal straight line 57, while the second slant surface 17k is located above the horizontal straight line 57.

Further, in Fig. 5, reference numeral 61 indicates a first representative point (or first given point) on the first slant surface 17j, reference numeral 62 indicates a second representative point (or second given point) on the second slant surface 17k, 63 indicates a first tangent line of the first slant surface 17j passing the first representative point 61, and 64 indicates a second tangent line of the second slant surface 17k passing the second representative point 62.

Next, a description will be given about behavior of the fin 17.

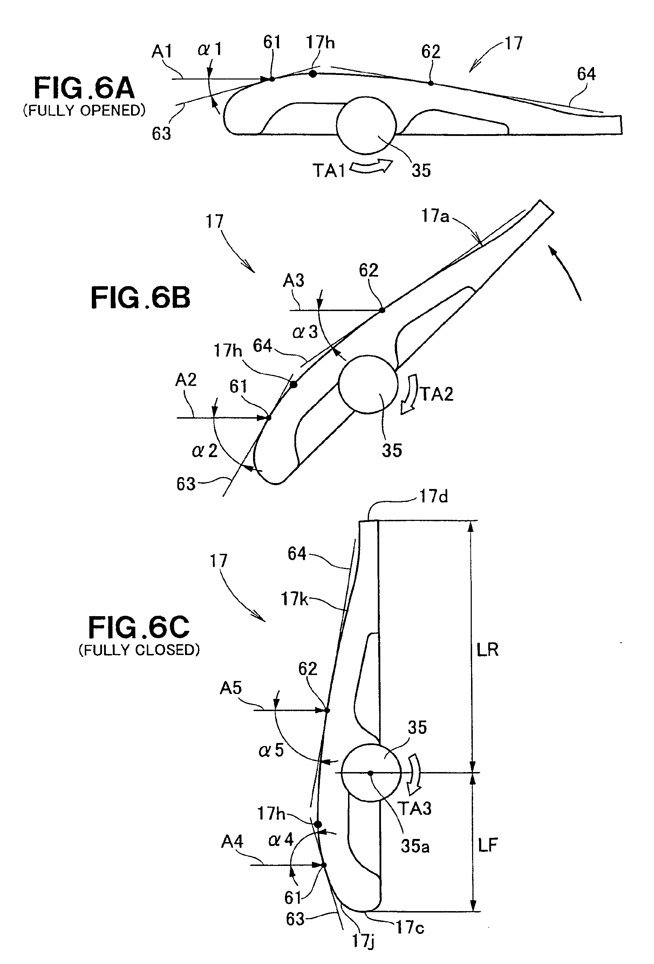

Fig. 6A shows the fin 17 in the fully opened position, in which the cross-sectional length of the fin 17 extends in the front-rear direction of the vehicle. In the figure, α 1 indicates a first angle defined between a horizontal travel wind flow A1 and the first tangent line 63. Because of the first angle α 1, first fin-closing pivoting torque TA1 is produced in the pivot shaft 35 due to force (i.e., wind force or pressure) acting to close the fin 17 or acting in a fin-closing direction.

Fig. 6B shows the fin 17 inclined about the pivot shaft 35 by about 45° from the position of Fig. 6A in the fin-closing direction. In this position, fin-opening pivoting torque of the pivot shaft 35 produced due to wind pressure, which the wind receiving surface 17a of the fin 17 receives from travel wind, becomes the greatest due to positional relationship between the wind receiving surface 17a of the fin 17 and the pivot shaft 35 and the shape of the wind receiving surface 17a.

In Fig. 6B, α2 indicates a second angle defined between a horizontal travel wind flow A2 and the first tangent line 63, and the second angle α2 is greater than the angle α1 shown in Fig. 6A. Because of such a second angle α2, fin-closing pivoting torque is produced in the pivot shaft 35 due to force acting to close the fin 17 or acting in a fin-closing direction, and this fin-closing pivoting torque is greater than the first fin-closing pivoting torque TA1 of Fig. 6A.

Further, α 3 indicates a third angle defined between a horizontal travel wind flow A3 and the second tangent line 64. Because of such a third angle α 3, fin-opening pivoting torque is produced in the pivot shaft 35 due to force acting to open the fin 17. As a consequence, second fin-opening pivoting torque TA2, comprising a combination of the fin-closing pivoting torque based on the second angle α 2 and the fin-opening pivoting torque based on the third angle α 3, is produced in the pivot shaft 35.

Fig. 6C shows the fin 17 in the fully closed position fully closing the external air introduction section IN, where the cross-sectional length of the fin 17 extends in the up-down direction of the vehicle. Although horizontal travel wind flows A4 and A5 hit the first slant surface 17j and second slant surface 17k, respectively, the fin 17 is influenced by relationship between a distance LF from the pivot shaft 35 (more specifically, the axis 35a) to the front end portion 17c and a distance LR from the pivot shaft 35 to the rear end portion 17d (LR >LF) more greatly than by fourth and fifth angles α 4 and α 5 defined between the horizontal travel wind flows A4 and A5 and the first and second tangent lines 63 and 64, so that fin-opening pivoting torque TA3 is produced in the pivot shaft 35 due to force acting to open the fin 17.

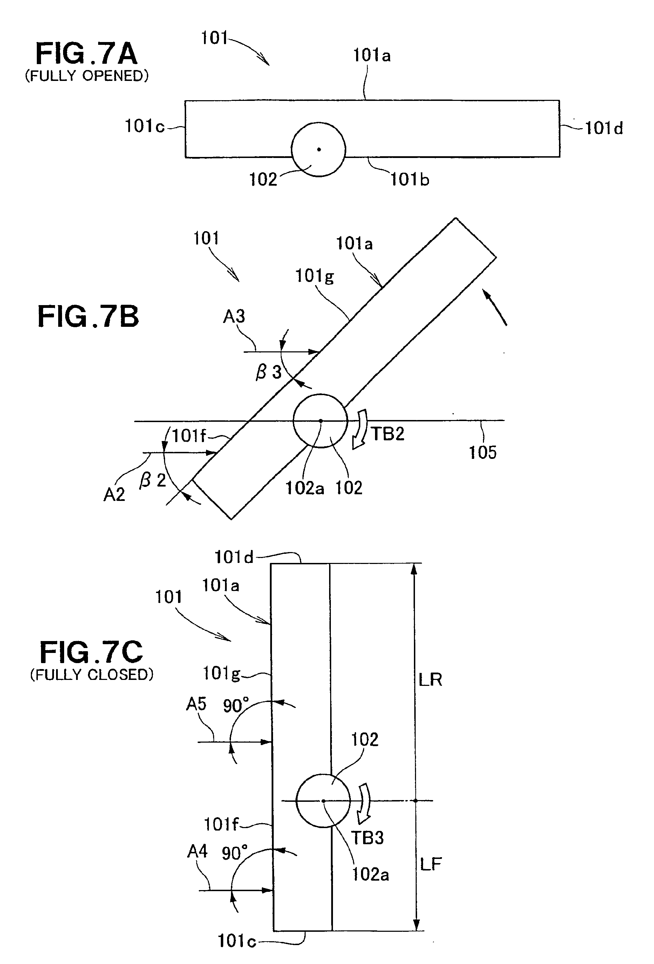

Figs. 7A to 7C show behavior of a comparative conventional example of a fin 101 as compared to that of the fin 17 employed in the first embodiment. Fig. 7A shows the fin 101 in a fully opened position. The fin 101 is formed in a rectangular cross-sectional shape, and the cross-sectional length of the fin 101 extends in the front-rear direction of the vehicle.

The fin 101 has two surfaces opposite from each other in the width direction of the fin 101, i.e. a wind receiving surface 101a and a back surface 101b, and front end rear end portions 101c and 101d opposite from each other in the cross-sectional longitudinal or length direction.

Because the entire flat wind receiving surface 101a extends along flows of travel wind, almost no pivoting torque is produced in a pivot shaft 102 of the fin 101.

Fig. 7B shows the fin 101 inclined by about 45° from the position of Fig. 7A in the fin-closing direction. In the position inclined by about 45°, fin-opening pivoting torque of the pivot shaft 102 produced due to wind pressure which the wind receiving surface 101a of the fin 101 receives from the travel wind, becomes the greatest due to positional relationship between the wind receiving surface 101a of the fin 101 and the pivot shaft 102 and the shape of the wind receiving surface 101a.

In Fig. 7B, 101f indicates a lower wind receiving surface portion of the surface 101a located below an imaginary horizontal straight line 105 passing the axis 102a of the pivot shaft 102, and 101g indicates an upper wind receiving surface portion of the surface 101a located above the imaginary horizontal straight line 105. In this case, an angle β2 defined between a horizontal travel wind flow A2 and the lower wind receiving surface portion 101f and an angle β3 defined between a horizontal travel wind flow A3 and the upper wind receiving surface portion 101g have relationship of " β2 = β3 = 45° ".

Because of the angle β 2, fin-closing pivoting torque is produced in the pivot shaft 102 due to force (wind force or pressure) acting to close the fin 101. Because of the angle β3, fin-opening pivoting torque is produced in the pivot shaft 102 due to force acting to open the fin 101. As a consequence, fin-opening pivoting torque TB2, comprising a combination of the fin-closing pivoting torque based on the angle β 2 and the fin-opening pivoting torque based on the third angle β 3, is produced in the pivot shaft 102.

Fig. 7C shows the fin 101 in a fully closed position, where the cross-sectional length of the fin 101 extends in the up-down direction of the vehicle. Travel wind flows A4 and A5 perpendicularly hit lower and upper portions, respectively, of the wind receiving surface 101a located below and above the axis 102a of the pivot shaft 102, so that fin-opening pivoting torque TB3 is produced in the pivot shaft 102 due to force acing to open the fin 101 on the basis of relationship between a distance LF from the pivot shaft 102 (more specifically, the axis 102a) to the front end portion 101c and a distance LR from the pivot shaft 102 to the rear end portion 101d.

Because the angle α2 in Fig. 6B is greater than the angle β2 in Fig. 7B, the pivoting torque produced due to the force acting in the fin-closing direction is greater in the fin 17 than in the fin 101. Further, because the angle α 3 in Fig. 6B is smaller than the angle β3 in Fig. 7B, the pivoting torque produced due to the force acting in the fin-opening direction is smaller in the fin 17 than in the fin 101.

Because the closing pivoting torque in the fin 17 is greater than in the fin 101 and the opening pivoting torque in the fin 17 is smaller than in the fin 101 as noted above, the fin 17 can be closed with a smaller force than the fin 101. Thus, fin-closing pivoting torque that is to be produced by the torque motor 26 (see Fig. 1) can be reduced, and thus, power consumption by the torque motor 26 can be reduced.

Further, because the angle α4 is smaller than 90° as seen in Figs. 6C and 7C, the pivoting torque by the force acting in the fin-closing direction is smaller in the fin 17 than in the fin 101. Furthermore, because the angle α5 is smaller than 90° in Figs. 6C and 7C, the pivoting torque by the force acting in the fin-opening direction is smaller in the fin 17 than in the fin 101.

Because the pivoting torque by the force acting in the fin-closing direction is smaller in the fin 17 than in the fin 101 and the opening pivoting torque by the force acting in the fin-opening direction is smaller in the fin 17 than in the fin 101 as noted above, the fin 17 can be opened or closed with a smaller force than the fin 101. Thus, the pivoting torque that is to be produced by the torque motor 26 (see Fig. 1) in opening or closing the fin 17 can be reduced as compared to the pivoting torque that is to be produced by the torque motor in opening or closing the fin 101.

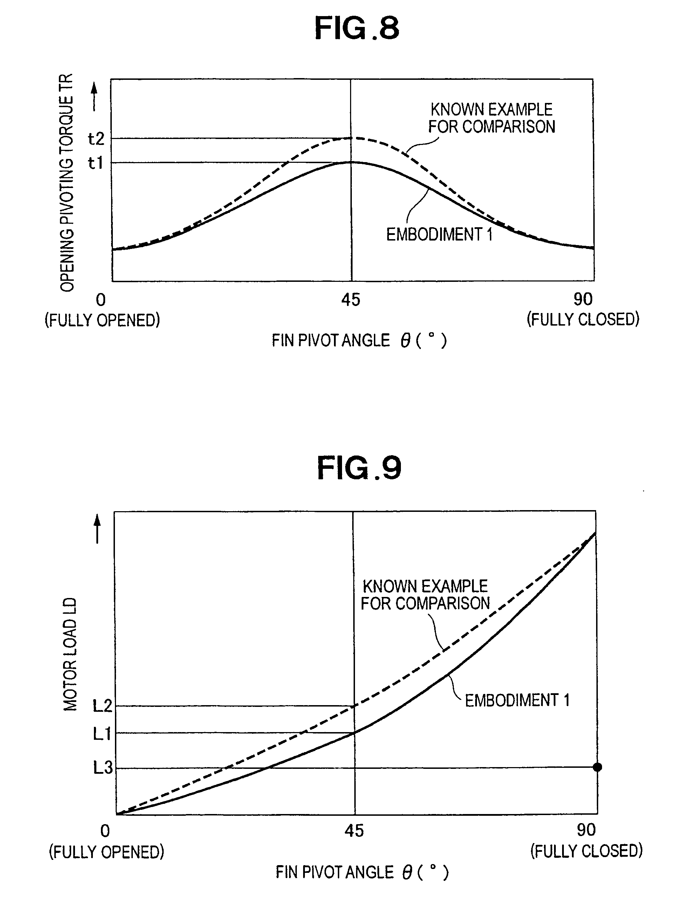

Fig. 8 is a graph showing relationship between the opening pivoting torque and pivot angle of the fin 17 (Figs. 6A to 6C) employed in the first embodiment (hereinafter "fin of the first embodiment" and shown as "Embodiment 1" in the figure) and the opening pivoting torque and pivot angle of the fin 101 (Figs. 7A to 7C), where the vertical axis represents the opening pivoting torque TR while the horizontal axis represents the pivot angle θ (measured in degrees (° )) of the fin.

With the fin 17 of the first embodiment (Figs. 6A to 6C), as indicated by a solid line in Fig. 8, the opening pivoting torque TR is small when the fin pivot angle θ is at and near zero degree (fully opened) angle and at and near 90° (fully closed) angle, but it gradually becomes great as the fin pivot angle θ approaches 45° and then reaches the maximum at the fin pivot angle θ of 45°.

With the comparative conventional example 101, as indicated by a broken line in Fig. 8, the opening pivoting torque TR is small when the fin pivot angle θ is at and near zero degree and at and near 90° degree as with the fine 17 of the first embodiment, but it gradually becomes great as the fin pivot angle θ approaches 45° and then reaches the maximum at a fin pivot angle θ of slightly over 45° .

At the fin pivot angle θ of 45° , the opening pivoting torque TR of the fin 17 of the first embodiment takes a value t1, while the opening pivoting torque TR of the comparative example 101 takes a value t2 greater than t1 (t1 < t2). The relationship of t1 < t2 is maintained at the other pivot angles than 45° , and a difference between t1 and t2 becomes the greatest when the fin pivot angle θ is at and around 45° .

Fig. 9 is a graph showing relationship between the necessary motor load of the torque motor 26 (Fig. 1) and the fin pivot angle, where the vertical axis represents the motor load LD of the torque motor 26 while the horizontal load represents the pivot angle θ (measured in degrees (° )) of the fin.

The motor load LD, which is torque necessary for the torque motor 26 to pivot the plurality of fins 17, is generated in view of a combination of torque for pivoting the plurality of pivot shafts 35 by wind pressure acting on the fins 17 and frictional force produced between the pivot shafts 35 and pivot shaft support sections as the pivot shafts 35 pivot.

With the fin 17 of the first embodiment ("Embodiment 1" Fig. 6), as shown by a solid line in Fig. 9, not only the motor load LD but also an increase amount of the motor load LD per fin pivot angle θ gradually increases as the fin 17 is closed from the fully opened position, and the motor load LD becomes the greatest when the fin 17 is fully closed.

Once the fin 17 of the first embodiment stops pivoting after having been fully closed, no more frictional force is produced between the pivot shaft 35 and the pivot shaft support section, the motor load LD only has to be of a value or level L3 for retaining the fin 17 in the closed position.

On the other hand, with the comparative conventional example, as shown by a broken line in Fig. 9, the motor load LD increases from a level corresponding to the fully opened angle to a level corresponding to the fully closed angle with a similar increasing tendency to that of the fin 17 of the first embodiment, but it is greater in value than the motor load LD required for the fin 17 of the first embodiment.

At the fin pivot angle θ of 45° , the motor loads LD for the fin 17 of the first embodiment and the comparative conventional example are L1 and L2, respectively, and a difference between the motor loads LD for the fin 17 of the first embodiment and the comparative conventional example (i.e., L2 - L1) becomes the greatest in the fin pivot angle range of 0° to 90 °.

Thus, with the fin 17 of the first embodiment, the motor load LD can be reduced over the entire fin pivot angle range of 0° to 90 ° as compared with the comparative conventional example, so that reduced power consumption can be achieved. In addition, the torque motor 26 can be reduced in capacity, which can thereby reduce the size, weight, necessary installation space and cost of the torque motor 26.

In the first embodiment of the front-vehicle-body-section ventilation structure, as described above in relation to Figs. 3 and 4, the shutter mechanism 13 is provided as an opening/closing means for the external air introduction section IN comprising the grille 21 and duct 22 and capable of introducing travel wind from the opening portions 21a located at the front end portion of the vehicle body, and the shutter mechanism (opening/closing means) 13 is opened and closed by the torque motor 26 as a drive means so that the amount of the travel wind to be introduced through the grille 21 and duct 22 is controlled. Further, in the instant embodiment of the front-vehicle-body-section ventilation structure, the shutter mechanism 13 comprises the plurality of fins 17 arranged in a side-by-side vertical row in such a manner as to fully close the grille 21 and duct 22 (these grille 21 and duct 22 constitute the external air introduction section IN). Each of the plurality of fins 17 has its respective or separate pivot shaft 35 about which the fin 17 can pivot into the opened and closed positions to fully open and close the external air introduction section IN. Each of the pivot shafts 35 extends not only perpendicularly or at right angles to the arranged direction (side-by-side row) of the fins 17 but also along the corresponding fin 17 in the fully closed position. Each of the pivot shafts 35 is offset toward the back surface 17b, opposite from the wind receiving surface 17a, of the corresponding fin 17 in the fully closed position without projecting, or being exposed, from the wind receiving surface 17a.

With the aforementioned structural arrangements, no concave/convex surfaces are formed on the wind receiving surfaces 17a of the fins 17, and thus, no disturbance occurs in flows of travel wind due to the wind receiving surfaces 17a, so that the travel wind can be delivered or directed smoothly into the radiator 23 and engine room. In this way, the instant embodiment can enhance aerodynamic performance of the vehicle body and effectively prevent generation of undesired wind roar. Also, the instant embodiment can achieve an enhanced design freedom of the wind receiving surfaces 17a and can finely adjust an amount of flows of travel wind and finely set a directing direction of travel wind.

Further, because each of the pivot shaft 35 is provided closer to the front end portion 17c of the corresponding fin 17 in the opened position (where the cross-sectional length of the fin 17 extends in the front-rear direction of the vehicle) than the centerline 55 passing the center of the cross-sectional length of the fin 17. Thus, it is possible to not only reduce the area of a wind receiving surface portion of the fin 17 which acts to pivot the fin 17 in the closing direction when travel wind has hit the fin 17, but also increase the area of a wind receiving surface portion of the fin 17 which acts to pivot the fin 17 in the opening direction. In this way, the instant embodiment can reduce the motor load of the torque motor 26 necessary for opening each of the fins 17.

Further, each of the wind receiving surface 17a has: the top portion 17h located on its partway position in the cross-sectional longitudinal direction of the fin 17; and the first slant surface 17j lying from the top portion 17h to the front end portion 17c; the second slant surface 17j lying from the top portion 17h to the rear end portion 17d. Also, the first slant surface 17j is formed to slant forward and downward to gradually approach the back surface 17b in a direction toward front end portion 17c, while the second slant surface 17k is formed to slant rearward and downward to gradually approach the back surface 17b in a direction toward the rear end portion 17d. Thus, when the fin 17 has started pivoting in the closing direction from the fully opened position, the first slant surface 17j can increase travel wind pressure that acts to pivot the fin 17 in the closing direction, and the second slant surface 17k can reduce travel wind pressure that acts to pivot the fin 17 in the opening direction. In this way, the instant embodiment can reduce the load of the torque motor 26 required when each of the fins 17 is to be closed, thereby reducing the power consumption by the torque motor 26.

Further, as described above in relation to Figs. 5 and 8, when the fin 17 is at a given pivot angle of, for example, 45 ° from the fully opened position where travel wind pressure the wind receiving surface 17a receives becomes the greatest, the top portion 17h and the pivot shaft 35 are positioned (to align with each other) on the same imaginary horizontal straight line 57 extending along the travel wind directing direction. Thus, at the given fin pivot angle where travel wind pressure the wind receiving surface 17a receives becomes the greatest, the first slant surface 17j, whose entire surface is located closer to the front end portion 17c than the horizontal straight line 57, can increase auxiliary fin-closing pivoting force imparted by travel wind pressure, while the second slant surface 17k, whose entire surface is located closer to the rear end portion 17d than the horizontal straight line 57, can reduce force occurring due to travel wind pressure and impeding pivoting movement, in the closing direction, of the fin 17 (i.e., fin-closing impeding force).

Thus, at the given fin pivot angle where travel wind pressure the wind receiving surface 17a receives becomes the greatest, the instant embodiment can reduce the load of the torque motor 26 necessary for driving the fins 17 as compared to conventionally-known ventilation structures employing, for example, the fins 101 of Fig. 7A having the flat wind receiving surface 101a.

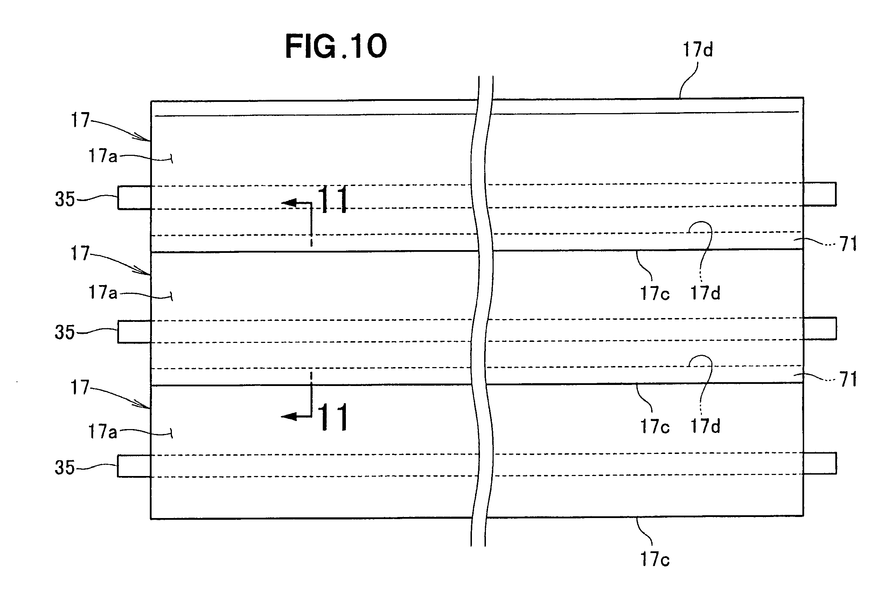

Next, a description will be given about a second embodiment of the front-vehicle-body-section ventilation structure of the present invention, with reference to Figs. 10 to 14. Similar elements to those in the first embodiment are indicated by the same reference numerals as used for the first embodiment and will not be described here to avoid unnecessary duplication.

As shown in Fig. 10, each of the fins 17 in the fully closed position includes an overlapping portion 71 which extends along the pivot shaft (shaft portion) 35 and which overlaps with part of another fin 71 adjoining the fin 17. Whereas the lowermost fin 17 and the middle fin 17 have such overlapping portions 71 at and near their respective rear end portions 17d, the uppermost fin 17 has no such overlapping portion 71 at and near its rear end portion 17d. Further, although the second embodiment is shown as including three fins 17, it may include any other desired number of fins 17, such as two or four, as long as travel wind can be controllably introduced through the fins 17 in the manner described above in relation to the first embodiment.

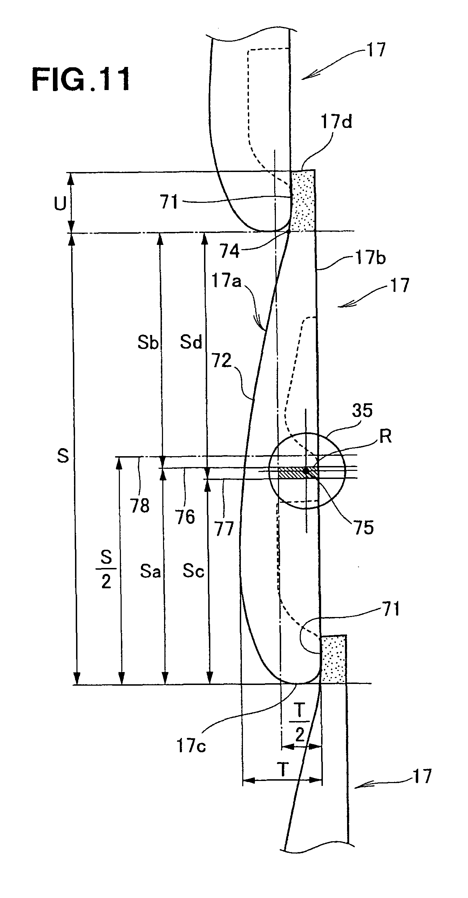

The pivot shaft 35 employed in the second embodiment is positioned as follows. In the second embodiment, a region S of the wind receiving surface 17a that receives travel wind when the corresponding fin 17 is in the fully closed position is provided as an effective wind receiving surface 72, as shown in Figs. 10 and 11. Each of the middle and lowermost fins 17 has, at and near its rear end portion 17d, a region U which overlaps with part of the adjoining fin 17 is provided as the overlapping portion 71.

Further, in the second embodiment, as shown in Fig. 11, the front end portion 17c of each of the fins 17 is provided as an effective front end 17c, and the opposite end from the effective front end 17c is provided as an effective rear end 17d. The effective wind receiving surface 72 has a length Sa from the effective front end 17c to the center (or axis) 75 of the pivot shaft 35 and a length Sb from the center 75 of the pivot shaft 35 to the effective rear end 74, and a length ratio between the length Sa and the length Sb is "4.8 : 5.2" at a position 76 of the effective wind receiving surface 72, and the pivot shaft 35 is disposed between such a position 76 and the effective front end 17c, i.e. in a region of the length Sa.

Further, on condition that the pivot shaft 35 is disposed in the region Sa, it is more preferable that the pivot shaft 35 be located in a region Sd lying from a position 77, where a length ratio between a length Sc from the effective front end 17c to the center 75 of the pivot shaft 35 and a length Sd from the center 75 of the pivot shaft 35 to the effective rear end 74 is "4.5 : 5.5", to the effective rear end 74. Namely, it is more preferable that the pivot shaft 35 be located in a region R (hatched region R in Fig. 11) where the length ratio is in a range of "4.8 : 5.2" to "4.5 : 5.5". Note that reference numeral 78 in Fig. 11 indicates a middle point of the travel wind receiving region S.

However, in the uppermost fin 17, which has no overlapping portion 71, the entire wind receiving surface 17a constitutes the effective wind receiving surface 72, and the rear end portion 17c constitutes the effective rear end.

The following describe behavior of the fin 17 employed in the second embodiment.

When the vehicle has got into a puddle, water splashed up by wheels of the vehicle might enter through the external air introduction section IN as indicated by thick arrows in Fig. 2.

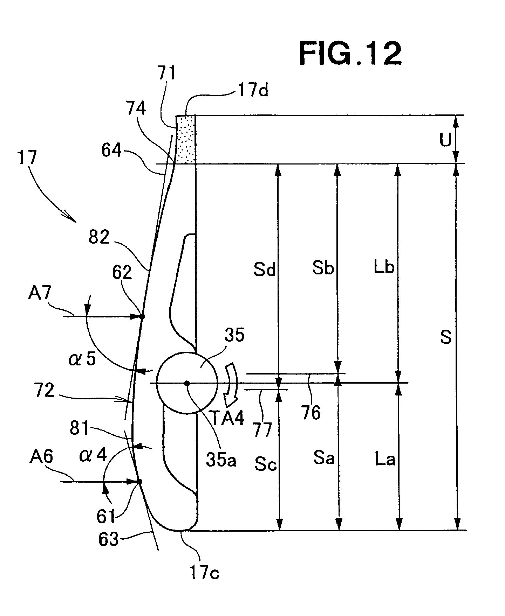

As shown in Fig. 12, water flows A6 and A7 respectively hit a portion 81 of the effective wind receiving surface 72 closer to the effective front end 17c than the pivot shaft 35 and a portion 82 of the effective wind receiving surface 72 closer to the effective rear end 74 than the pivot shaft 35. However, fin-opening pivoting torque TA4 is produced in the pivot shaft 35 due to force acting to open the fin 17 by being influenced by a distance La from the pivot shaft 35 (more specifically, the axis 35a of the pivot shaft 35) to the effective front end 17c and a distance Lb from the pivot shaft 35 to the effective rear end 74 (Lb > La) more strongly than angles α4 and α5 defined by the horizontal water flow A6 and the tangent line 63 and by the horizontal water flow A7 and the tangent line 64.

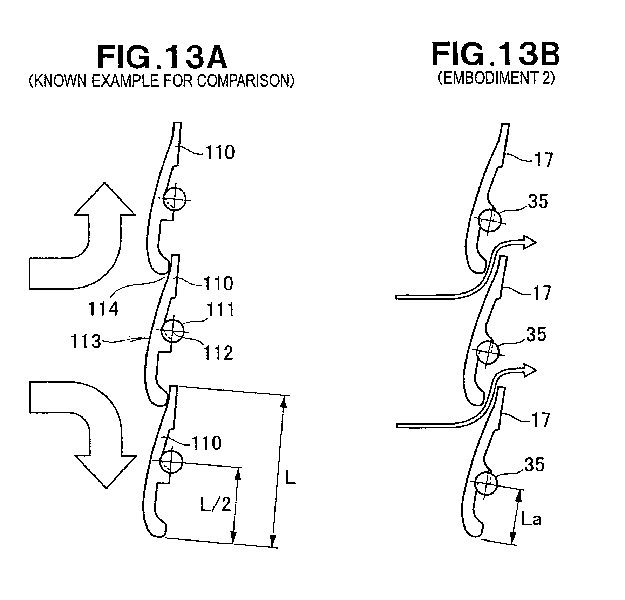

Fig. 13A is a view explanatory of behavior of a comparative conventional example of a fin 110. In the comparative conventional example 110, the axis 112 of a pivot shaft 111 is located closer to an effective rear end 114 of the fin 110 than a middle point of an effective wind receiving surface 113. In this example, no pivoting torque is produced in the fin-opening direction even when water flows have hit the effective wind receiving surface 113 as indicated by white arrows, and thus, the fin 110 is not opened. As a consequence, the water flows are pushed back from the effective wind receiving surface 113, imposing a load on the fin 110.

Fig. 13B is a view explanatory of behavior of the fin 17 employed in the second embodiment (shown as "Embodiment 2" in the figure). When water has hit the fin 17, pivoting torque is produced in the fin-opening direction as set forth above in relation to Fig. 12, so that the fin 17 is opened to allow the water to escape as indicated by white arrows. Thus, a load on the fin 17 can be reduced.

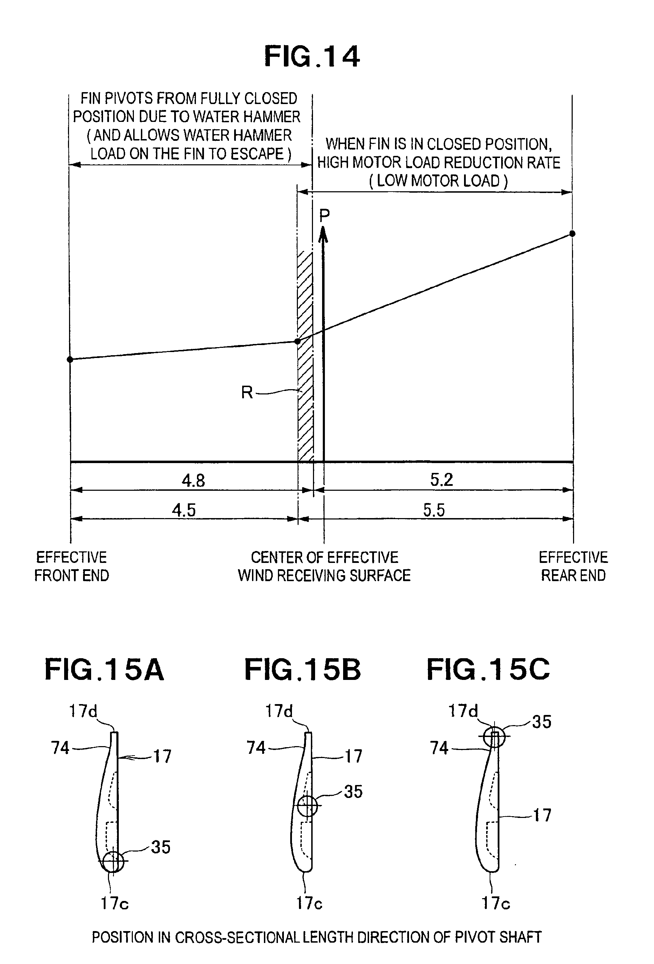

The following describe relationship between the position of the pivot shaft and the load on the fin, with reference to Figs. 14 and 15. In Fig. 14, the vertical axis P represents the motor load during pivoting movement of the fin 17 in the opening direction, and an inclination angle of a solid-line curve indicates a reduction rate of the motor load; a smaller inclination angle of the solid-line curve (i.e., solid-line curve portion closer to the horizontal line) indicates a smaller reduction rate of the motor load while a greater inclination angle of the solid-line curve (i.e., solid-line curve portion closer to the vertical line) indicates a greater reduction rate of the motor load).

In the case where the pivot shaft 35 is disposed in a region lying from a position, where the length ratio between the length from the effective front end to the center of the pivot shaft 35 and the length from the center of the pivot shaft 35 to the effective rear end is "4.8 : 5.2", to the effective front end, the fin 17 pivots from the fully closed position in the opening direction due to a water hammer and thereby allows a water hammer load on the fin 17 to escape, as shown in Fig. 14. Namely, in the case where the pivot shaft 35 is disposed close to the effective front end 17c, the fin 17 is easy to pivot in the opening direction due to a water hammer.

Further, in the case where the pivot shaft 35 is disposed in a region lying from a position, where the length ratio between the length from the effective front end to the center of the pivot shaft 35 and the length from the center of the pivot shaft 35 to the effective rear end is "4.5 : 5.5" when the fin 17 is in the closed position, to the effective rear end, a higher reduction rate of the motor load can be achieved, and thus, the motor load can be reduced. Namely, in the case where the pivot shaft 35 is disposed close to the effective rear end 74 of the fin 17 as shown in Fig. 15C, a higher reduction rate of the motor load can be achieved.

Furthermore, in the case where the pivot shaft 35 is disposed in the region R, where the regions mentioned above in relation to Fig. 14 overlap with each other, as shown in Fig. 15B, a load imposed on the fin 17 due to a water hammer is allowed to escape, and the motor load can be reduced.

According to the second embodiment, as shown in Figs. 11 and 14, the pivot shaft 35 is disposed in the region lying from the position, where the length ratio between the length from the effective front end 17c to the center 75 of the pivot shaft 35 and the length from the center 75 of the pivot shaft 35 to the effective rear end 74 is "4.8 : 5.2", to the effective front end 17c.

Thus, in response to any types of water hammers, the above-described arrangements can create a difference in fin-opening direction between a water hammer load (water pressure) received by the wind receiving surface portion 81 lying from the effective front end 17c to the center 75 of the pivot shaft 35 and a water hammer load (water pressure) received by the wind receiving surface portion 82 lying from the center 75 of the pivot shaft 35 to the effective rear end 74, so that the fin 17 can be opened reliably. Consequently, when a water hammer has hit the fin 17, the second embodiment can reliably cause the fin 17 to pivot from the closed position toward the opened position and thereby allows the water hammer load on the fin 17 to escape past the fin 17, so that it can reliably protect the fin 17.

As set forth above in relation to Figs. 11 and 14, the pivot shaft 35 is provided in the region R where the above-mentioned length ratio is in the range of 4.8 : 5.2 to 4.5 : 5.5. Therefore, the pivot shaft 35 can be prevented from being located at a position closer to the effective front end 17c than a position where the motor load reduction rate critically lowers when the fin 17 is opened, and can be located at a position where the motor load is not increased while the fin 17 is in the closed position.

In the above-described first and second embodiments, when the fin 17 is positioned such that its cross-sectional length extends in the front-rear direction, the wind receiving surface 17a of the fin 17 has a first surface portion lying from the top portion 17h to the front end portion 17c and slanting to gradually approach the back surface 17b in the direction toward the front end portion 17c and a second surface portion lying from the top portion 17h to the rear end portion 17d and slanting to gradually approach the back surface 17b in the direction toward the rear end portion 17d, as shown in Fig. 4. However, the present invention is not so limited, and the wind receiving surface 17a may be formed in such a manner that the first surface portion lying from the top portion 17h to the front end portion 17c slants to gradually approach the back surface 17b in the direction toward the front end portion 17c while the second surface portion lying from the top portion 17h to the rear end portion 17d extends straight rearwardly without slanting.

Further, whereas the pivot shaft 35 has been shown and described above as disposed closer to the front end portion 17c than the centerline 55 passing the center of the cross-sectional length L of the fin 17, the present invention is not so limited, and the pivot shaft 35 may be disposed on the centerline 55.

Furthermore, whereas the fins 17 have been shown and described above as provided in the external air introduction section IN in vertically spaced-apart relation to one another, the fins 17 may be provided in the external air introduction section IN and spaced from one another in any desired direction, as long as the external air introduction section IN can be opened and closed via the fins 17.

The front-vehicle-body-section ventilation structure of the present invention is well suited for application to automotive vehicles.

A ventilation structure includes: an external air introduction section IN capable of introducing travel wind from front-end opening portions 21a into a front vehicle body section; a shutter mechanism 13 provided in the introduction section and openable and closable to control an amount of travel wind to be introduced into the body section. The shutter mechanism 13 includes a plurality of fins 17 arranged in vertically spaced-apart relation to one another and pivotable about their respective pivot shafts (35 extending in a width direction of the vehicle. Each of the pivot shafts 35 is provided offset toward a back surface 17b of the fin opposite from a wind receiving surface 17a of the fin which faces forward of the vehicle when the fin is in a closed position.

## Claims

1. A front-vehicle-body-section ventilation structure comprising:
an external air introduction section (IN) capable of introducing travel wind from opening portions (21a) provided in a front end section of a vehicle body; and
an opening/cdosing means (13) provided in the external air introduction section (IN) for controlling an amount of travel wind to be introduced from the opening portions, the opening/closing means (13) including a plurality of fins (17) arranged in a side-by-side row,
each of the fins (17) having a respective shaft portion (35) about which the fin is pivotable, via a drive means, between a fully opened position and a fully closed position to open and close the external air introduction section, the shaft portions (35) of the fins (17) extending perpendicularly to the row direction of the fins (17),
each of the shaft portions (35) being offset toward a back surface (17b) of a corresponding one of the fins, opposite from a travel wind receiving surface (17a) of the corresponding fin in the fully closed position, without being exposed from the travel wind receiving surface (17a) of a fin in the fully closed position,
wherein the wind receiving surface (17a) of each of the fins (17) has a top portion (17h) located on a partway position in the cross-sectional length direction of the fin,
**characterized in that**
the shaft portions (35) of the fins (17) extend along lengths of the fins (17),
the wind receiving surface (17a) of each of the fins (17) has a first slant (17j) lying from the top portion (17h) to the front end portion (17c) of the fin (17), and a second slant surface (17k) lying from the top portion to a rear end portion (17d) of the fin as viewed when the fin is in the opened position with the cross-sectional length of the fin oriented in the front-rear direction of the vehicle; and
the first slant surface (17j) slants to gradually approach the back surface (17b) of the fin in a direction toward the front end portion (17c), while the second slant surface (17k) slants to gradually approach the back surface (17c) of the fin in a direction toward the rear end portion (17d),
the top portion (17h) of the wind receiving surface (17a) of each of the fins (17) is offset from the axis (35a) of the shaft portion (35) toward the front end portion (17c), and
at a pivot angle of the fin where a fin-opening pivoting torque produced to the wind pressure the wind receiving surface (17a) of the fin receives from the travel wind becomes greatest, the top portion (17h) and the shaft portion (35) are located in alignment with each other on a same imaginary straight line (57) extending along a travel wind directing direction of the ventilation structure.

2. The front-vehicle-body-section ventilation structure of claim 1, wherein each of the shaft portions (35) is provided at a center position (55) in a cross-sectional length direction of the corresponding fin or provided closer to a front end portion (17c) of the fin that the center position in the cross-sectional length direction, as viewed when the fin is in the opened position with the cross-sectional length of the fin (17) oriented in a front-rear direction of the vehicle.

3. The front-vehicle-body-section ventilation structure of claim 1 or 2, wherein a region of the wind receiving surface (17a) which receives travel wind when the fin (17) is in the fully closed position constitutes an effective wind receiving surface (72), the front end portion (17c) of the fin constitutes an effective front end (17c) and an end (17d) of the effective wind receiving surface (72) opposite from the effective front end (17c) constitutes an effective rear end (17d), and
wherein the shaft portion (35) is disposed in a region lying from a position, where ratio between a length (LF) from the effective front end (17c) to a center (75) the shaft portion (35) and a length (LR) from the center (75) of the shaft portion (35) to the effective rear end (17d) is in a range from 4.8 : 5.2 to 4.5 : 5.5 , to the effective front end (17d).

## Patentansprüche

1. Fahrzeugfrontkörperabschnitt-Lüftungsstruktur, umfassend:
einen Außenlufteinleitungsabschnitt (IN), der in der Lage ist, Fahrtwind von Öffnungsabschnitten (21 a), die an einem vorderen Endabschnitt eines Fahrzeugkörpers vorgesehen sind, einzuleiten; und
ein Öffnungs-/Schließmittel (13), das in dem Außenlufteinleitungsabschnitt (IN) vorgesehen ist, um eine Menge von Fahrtwind zu steuern/zu regeln, die von den Öffnungsabschnitten einzuleiten ist,
wobei das Öffnungs-/Schließmittel (13) eine Mehrzahl von Lamellen (17) aufweist, die nebeneinander in einer Reihe angeordnet sind, wobei jede der Lamellen (17) einen jeweiligen Schaftabschnitt (35) aufweist, um den herum die Lamelle über Antriebsmittel zwischen einer vollständig geöffneten Stellung und einer vollständig geschlossenen Stellung schwenkbar ist, um den Außenlufteinleitungsabschnitt zu öffnen und zu schließen, wobei sich die Schaftabschnitte (35) der Lamellen (17) senkrecht zur Reihenrichtung der Lamellen (17) erstrecken;
wobei jeder der Schaftabschnitte (35) zu einer Rückseite (17b) einer entsprechenden der Lamellen versetzt ist, entgegengesetzt von einer Fahrtwindaufnahmefläche (17a) der entsprechenden Lamelle in der vollständig geschlossenen Stellung, ohne von der Fahrtwindaufnahmefläche (17a) der Lamelle in der vollständig geschlossenen Stellung freizuliegen,
worin die Windaufnahmefläche (17a) jeder der Lamellen (17) einen oberen Abschnitt (17h), der auf einer Teilwegposition in der Querschnittslängsrichtung der Lamelle angeordnet ist, aufweist,
**dadurch gekennzeichnet, dass** die Schaftabschnitte (35) der Lamellen (17) sich entlang den Längen der Lamellen (17) erstrecken, die Windaufnahmefläche (17a) jeder der Lamellen (17) eine erste schräge Fläche (17j), die von dem oberen Abschnitt (17h) zu dem vorderen Endabschnitt (17c) der Lamelle (17) liegt, und eine zweite schräge Fläche (17k), die von dem oberen Abschnitt zu einem hinteren Endabschnitt (17d) der Lamelle liegt, bei Betrachtung, wenn die Lamelle in der geöffneten Stellung ist, wobei die Querschnittslänge der Lamelle in der Vorne-Hinten-Richtung des Fahrzeugs orientiert ist; und die erste schräge Fläche (17j) abgeschrägt ist, um sich der Rückseite (17b) der Lamelle in Richtung zu dem vorderen Endabschnitt (17c) hin allmählich anzunähern, während die zweite schräge Fläche (17k) abgeschrägt ist, um sich der Rückseite (17c) der Lamelle in Richtung zu dem hinteren Endabschnitt (17d) allmählich anzunähern,
wobei der obere Abschnitt (17h) der Windaufnahmefläche (17a) jeder der Lamellen (17) von der Achse (35a) des Schaftabschnitts (35) zu dem vorderen Endabschnitt (17c) hin versetzt ist, und bei einem Schwenkwinkel der Lamelle, wo ein Lamellenöffnungsschwenkdrehmoment, auf den Winddruck erzeugt wird, den die Windaufnahmefläche (17a) der Lamelle von dem Fahrtwind erhält, am größten wird, der obere Abschnitt (17h) und der Schaftabschnitt (35) in Ausrichtung zueinander auf der gleichen imaginären geraden Linie (57) angeordnet werden, die sich entlang der Fahrtwindrichtung der Lüftungsstruktur erstreckt.

2. Die Fahrzeugfrontkörperabschnitt-Lüftungsstruktur von Anspruch 1, worin jeder der Schaftabschnitte (35) an einer Mittelposition (55) in Querschnittslängsrichtung der entsprechenden Lamelle vorgesehen ist oder näher einem vorderen Endabschnitt (17c) der Lamelle vorgesehen ist als die Mittelposition in der Querschnittslängsrichtung, bei Betrachtung, wenn die Lamelle in der geöffneten Stellung ist, wobei die Querschnittslänge der Lamelle (17) in der Vorne-Hinten-Richtung des Fahrzeugs orientiert ist.

3. Die Fahrzeugfrontkörperabschnitt-Lüftungsstruktur von Anspruch 1 oder 2, worin ein Bereich der Windaufnahmefläche (17a), der Fahrtwind erhält, wenn die Lamelle (17) in der vollständig geschlossenen Stellung ist, eine effektive Windaufnahmefläche (72) darstellt, wobei der vordere Endabschnitt (17c) der Lamelle ein effektives Vorderende (17c) darstellt und ein Ende (17d) der effektiven Windaufnahmefläche (72), das vom effektiven Vorderende (17c) entgegengesetzt ist, ein effektives Hinterende (17d) darstellt, und worin der Schaftabschnitt (35) in einem Bereich angeordnet ist, der von einer Position, wo ein Verhältnis zwischen einer Länge (LF) von dem effektiven Vorderende (17c) zu einer Mitte (75) des Schaftabschnitts (35) und einer Länge (LR) von der Mitte (75) des Schaftabschnitts (35) zum effektiven Hinterende (17d) im Bereich von 4,8 : 5,2 bis 4,5 : 5,5 zum effektiven Vorderende (17d) liegt.

## Revendications

1. Structure de ventilation de section de carrosserie de véhicule avant comprenant :
une section d'introduction d'air externe (IN) capable d'introduire le déplacement d'air par des parties d'ouverture (21a) prévues dans une section d'extrémité avant d'une carrosserie de véhicule ; et
des moyens d'ouverture/fermeture (13) prévus dans la section d'introduction d'air externe (IN) pour commander une quantité de déplacement d'air à introduire par les parties d'ouverture, les moyens d'ouverture/fermeture (13) comprenant une pluralité d'ailettes (17) agencées sur une rangée côte à côte,
chacune des ailettes (17) ayant une partie d'arbre (35) respective autour de laquelle l'ailette peut pivoter, via des moyens d'entraînement, entre une position complètement ouverte et une position complètement fermée, pour ouvrir et fermer la section d'introduction d'air externe, les parties d'arbre (35) des ailettes (17) s'étendant perpendiculairement au sens de la rangée des ailettes (17),
chacune des parties d'arbre (35) étant décalée vers une surface arrière (17b) d'une ailette correspondante des ailettes, opposée à une surface de réception de déplacement d'air (17a) de l'ailette correspondante dans la position complètement fermée, sans être exposée à la surface de réception de déplacement d'air (17a) d'une ailette dans la position complètement fermée,
dans laquelle la surface de réception d'air (17a) de chacune des ailettes (17) a une partie supérieure (17h) positionnée dans une position intermédiaire dans le sens de la longueur transversale de l'ailette,
**caractérisée en ce que** :
les parties d'arbre (35) des ailettes (17) s'étendent le long des longueurs des ailettes (17),
la surface de réception d'air (17a) de chacune des ailettes (17) a une première inclinaison (17j) allant de la partie supérieure (17h) à la partie d'extrémité avant (17c) de l'ailette (17), et une deuxième surface inclinée (17k) allant de la partie supérieure à une partie d'extrémité arrière (17d) de l'ailette, comme observé lorsque l'ailette est dans la position ouverte avec la longueur transversale de l'ailette orientée dans la direction avant-arrière du véhicule ; et
la première surface inclinée (17j) s'incline pour s'approcher progressivement de la surface arrière (17b) de l'ailette dans une direction allant vers la partie d'extrémité avant (17c), alors que la deuxième surface inclinée (17k) s'incline pour s'approcher progressivement de la surface arrière (17c) de l'ailette dans une direction allant vers la partie d'extrémité arrière (17d),
la partie supérieure (17h) de la surface de réception d'air (17a) de chacune des ailettes (17) est décalée par rapport à l'axe (35a) de la partie d'arbre (35) vers la partie d'extrémité avant (17c), et
au niveau d'un angle de pivot de l'ailette où un couple de pivotement d'ouverture d'ailette produit par la pression d'air que la surface de réception d'air (17a) de l'ailette reçoit du déplacement d'air, devient le plus important, la partie supérieure (17h) et la partie d'arbre (35) sont alignées l'une par rapport à l'autre sur une même ligne droite imaginaire (57) s'étendant le long d'une direction de déplacement d'air de la structure de ventilation.

2. Structure de ventilation de section de carrosserie de véhicule avant selon la revendication 1, dans laquelle chacune des parties d'arbre (35) est prévue dans une position centrale (55) dans le sens de la longueur transversale de l'ailette correspondante ou prévue plus à proximité d'une partie d'extrémité avant (17c) de l'ailette que de la position centrale dans le sens de la longueur transversale, comme observé lorsque l'ailette est dans la position ouverte avec la longueur transversale de l'ailette (17) orientée dans une direction avant-arrière du véhicule.

3. Structure de ventilation de section de carrosserie de véhicule avant selon la revendication 1 ou 2, dans laquelle une région de surface de réception d'air (17a) qui reçoit un déplacement d'air lorsque l'ailette (17) est dans la position complètement fermée constitue une surface de réception d'air efficace (72), la partie d'extrémité avant (17c) de l'ailette constitue une extrémité avant effective (17c) et une extrémité (17d) de la surface de réception d'air effective (72) opposée à l'extrémité avant effective (17c) constitue une extrémité arrière effective (17d), et
dans laquelle la partie d'arbre (35) est disposée dans une région allant d'une position dans laquelle le rapport entre une longueur (LF) de l'extrémité avant effective (17c) jusqu'à un centre (75) la partie d'arbre (35) et une longueur (LR) allant du centre (75) de la partie d'arbre (35) jusqu'à l'extrémité arrière effective (17d) est de l'ordre de 4,8:5,2 à 4,5:5,5, jusqu'à l'extrémité avant effective (17d).
